(19) Europäisches Patentamt / European Patent Office / Office européen des brevets

(11) **EP 3 556 786 B1**

(12) **EUROPEAN PATENT SPECIFICATION**

(45) Date of publication and mention
of the grant of the patent:
**21.04.2021  Bulletin 2021/16**

(21) Application number: **17881713.6**

(22) Date of filing: **05.12.2017**

(51) Int Cl.:
***C08F 236/18*** (2006.01)  ***C08F 2/38*** (2006.01)
***C08L 15/02*** (2006.01)

(86) International application number:
**PCT/JP2017/043652**

(87) International publication number:
**WO 2018/110369 (21.06.2018 Gazette 2018/25)**

(54) **XANTHOGEN-MODIFIED CHLOROPRENE RUBBER, RUBBER COMPOSITION, AND VULCANIZED MOLDED BODY**

XANTHOGENMODIFIZIERTER CHLOROPRENKAUTSCHUK, KAUTSCHUKZUSAMMENSETZUNG UND VULKANISIERTER FORMKÖRPER

CAOUTCHOUC DE CHLOROPRÈNE MODIFIÉ PAR UN XANTHOGÈNE AINSI QUE COMPOSITION DE CAOUTCHOUC ASSOCIÉE, ET CORPS MOULÉ PAR VULCANISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2016  JP 2016242372**

(43) Date of publication of application:
**23.10.2019  Bulletin 2019/43**

(73) Proprietor: **Denka Company Limited**
**Tokyo 103-8338 (JP)**

(72) Inventors:
• **KONDO Yasushi**
  **Itoigawa-city**
  **Niigata 949-0393 (JP)**
• **YAMAGISHI Uichiro**
  **Itoigawa-city**
  **Niigata 949-0393 (JP)**
• **ABE Yasushi**
  **Itoigawa-city**
  **Niigata 949-0393 (JP)**

(74) Representative: **Godemeyer Blum Lenze**
**Patentanwälte**
**Partnerschaft mbB - werkpatent**
**An den Gärten 7**
**51491 Overath (DE)**

(56) References cited:
**WO-A1-95/04766**          **JP-A- H0 376 734**
**JP-A- H1 060 049**        **JP-A- S5 543 109**
**JP-A- H07 286 071**       **JP-A- S56 106 909**
**JP-A- 2006 307 156**      **JP-A- 2007 191 710**
**JP-A- 2012 211 345**      **US-A1- 2009 036 608**
**US-A1- 2010 209 644**     **US-A1- 2016 039 999**
**US-B2- 9 475 895**

## Description

Technical Field

The present technology relates to a xanthogen-modified chloroprene rubber, a composition thereof, and a vulcanized molded body thereof. More specifically, the present technology relates to a xanthogen-modified chloroprene rubber suitably used for an air spring, a vehicle boot, a wiper, hoses, or a vibration isolation rubber, a composition thereof, and a vulcanized molded body thereof.

Background Art

Chloroprene rubbers excellent in mechanical strength, endurance fatigue under dynamic use conditions, and creep resistance after deformation are suitable for parts repeatedly subjected to dynamic deformation, such as an air spring, a vehicle boot, a wiper, or a vibration isolation rubber, and have been widely used mainly in automobile-related fields. With the development of the automobile industry, these products have been constantly demanded to improve the durability life and the reliability. A technology is known which combines a chloroprene-based rubber with a carbon black having an average laminated height Lc in the C-axis direction of the layer planes in the crystallite of 2 nm or more (see Patent Document 1, for example).

The chloroprene rubbers adhere to the metal surfaces of kneading machines, such as a Banbury mixer, a kneader, and an open roll, in kneading, and thus cleaning treatment after kneading is required in some cases. A blend obtained by kneading is preformed into a sheet shape or a ribbon shape, and then fed into a vulcanizing molding machine. However, the blend greatly shrinks, which makes it difficult to feed the blend in some cases. Therefore, a chloroprene rubber which hardly adheres to metal surfaces, causes less shrinkage of a blend thereof, and is excellent in workability has been demanded.

As chloroprene rubber balanced in workability, mechanical properties, endurance fatigue, deformation resistance, and the like, technologies using a carboxyl-modified chloroprene rubber are also known (see Patent Document 2, for example). However, it is a fact that the level of the endurance fatigue of such compositions is not sufficient for the current endurance fatigue requirement. Furthermore, the compositions also have problems that the deformation resistance at low temperature is high, the adhesiveness to roll is high, and the compound shrinkage is large.

Citation List

Patent Document

[Patent Document 1] JP-A No. 2001-131342
[Patent Document 2] JP-A No. H09-235414

Summary of the Invention

Technical Problem

The present technology provides a xanthogen-modified chloroprene rubber capable of achieving both good mechanical strength and good tensile fatigue resistance without deteriorating deformation resistance at low temperature and workability while maintaining weather resistance and flame retardancy and a rubber composition thereof.

Solution to Problem

More specifically, the present technology first provides a xanthogen-modified chloroprene rubber in which the bonding amount of chloroprene units is 78 to 98.9% by mass, the bonding amount of 2,3-dichloro-1,3-butadiene units is 1 to 20% by mass, and the bonding amount of $\alpha,\beta$-unsaturated carboxylic acid units is 0.1 to 2% by mass and the weight average molecular weight is 340,000 to 520,000.

As the $\alpha,\beta$-unsaturated carboxylic acid unit in the xanthogen-modified chloroprene rubber according to the present technology, at least one selected from acrylic acid, methacrylic acid, and 2-ethyl methacrylate may be comprised.

As the xanthogen in the xanthogen-modified chloroprene rubber according to the present technology, at least one selected from diethylxanthogen disulfide, diisopropylxanthogen disulfide, and dicyclohexylxanthogen disulfide may be comprised.

Next, the present technology provides a rubber composition comprising the xanthogen-modified chloroprene rubber according to the present technology and a vulcanized molded body obtained by vulcanizing the rubber composition.

As the vulcanized molded body according to the present technology, an air spring, a vehicle boot, a wiper, hoses, and a vibration isolation rubber can be mentioned.

Advantageous Effects of Invention

When the xanthogen-modified chloroprene rubber of the present technology is used, both good mechanical strength and good tensile fatigue resistance can be achieved without deteriorating deformation resistance at low temperature and workability while maintaining weather resistance and flame resistance of the vulcanized rubber obtained by vulcanizing the xanthogen-modified chloroprene rubber.

Description of Embodiments

Hereinafter, preferable aspects for carrying out the present technology are described in detail. Embodiments described below give typical examples of the present invention and the scope of the present invention shall not be narrowly construed by the embodiments.

<1. Xanthogen-modified chloroprene rubber>

A xanthogen-modified chloroprene rubber of the present technology comprises (1) chloroprene, (2) an $\alpha,\beta$-unsaturated carboxylic acid, and (3) 2,3-dichloro-1,3-butadiene as main components. Moreover, (4) other copolymerizable monomers may be comprised. As (5) a molecular weight regulator, alkylxanthogen sulfide is also used. Hereinafter, each component is described in detail.

(1) Chloroprene

The chloroprene which is the main component of the xanthogen-modified chloroprene rubber of the present technology is a compound (monomer) referred to as 2-chloro-1,3-butadiene.

(2) $\alpha,\beta$-Unsaturated carboxylic acid

The $\alpha,\beta$-unsaturated carboxylic acid which is another component of the xanthogen-modified chloroprene rubber of the present technology is a carboxylic acid having a reactive double bond in the molecule. Specifically, acrylic acid, methacrylic acid, itaconic acid, 2-ethylmethacrylic acid, 2-butylacrylic acid, and the like are mentioned. In the xanthogen-modified chloroprene rubber of the present technology, the $\alpha,\beta$-unsaturated carboxylic acid preferably comprises one kind or two or more kinds of acrylic acids, methacrylic acids, and 2-ethylmethacrylic acids. This is because these monomers are well-balanced in versatility and contribution to the expression of the advantageous effects of the present technology described above.

(3) 2,3-dichloro-1,3-butadiene

One of the other components of the xanthogen-modified chloroprene rubber of the present technology is 2,3-dichloro-1,3-butadiene.

(4) Other copolymerizable monomers

The other copolymerizable monomers which may be comprised in the xanthogen-modified chloroprene rubber of the present technology are not particularly limited insofar as the advantageous effects of the present technology are not impaired. One kind or two or more kinds of monomers copolymerizable with chloroprene may be freely selected and used. For example, 1-chloro-1,3-butadiene, styrene, acrylonitrile, methacrylonitrile, isoprene, butadiene, esters of acrylic acid and methacrylic acid, and the like are mentioned.

(5) Alkylxanthogen sulfide

The alkylxanthogen sulfide used as a molecular weight regulator of the xanthogen-modified chloroprene rubber of the present technology is not particularly limited insofar as the advantageous effects of the present technology are not impaired. For example, diethylxanthogen disulfide, diisopropylxanthogen disulfide, dicyclohexylxanthogen disulfide, dilaurylxanthogen disulfide, dibenzylxanthogen disulfide, and the like are mentioned. The alkylxanthogen sulfide for use in the present technology preferably comprises, in particular, one kind or two or more kinds of diethylxanthogen disulfide, diisopropylxanthogen disulfide, and dicyclohexylxanthogen disulfide. This is because these alkylxanthogen sulfides have high solubility in the chloroprene monomer, and therefore a good chloroprene molecular weight regulating effect can be obtained.

The xanthogen-modified chloroprene rubber has a (1) bonding amount of chloroprene units of 78 to 98.9% by mass, (2) a bonding amount of 2,3-dichloro-1,3-butadiene units of 1 to 20% by mass, and (3) a bonding amount of $\alpha,\beta$-unsaturated carboxylic acid units of 0.1 to 2% by mass and has a weight average molecular weight of 340,000 to 520,000.

By setting (2) the bonding amount of 2,3-dichloro-1,3-butadiene units to 1% by mass or more, permanent deformation due to compression at low temperature can be reduced. By setting (2) the bonding amount of 2,3-dichloro-1,3-butadiene units to 20% by mass or less, a sharp reduction in tensile strength or elongation at break of a vulcanizate can be prevented. The bonding amount of 2,3-dichloro-1,3-butadiene units may be freely set in the range of 1 to 20% by mass. It is more preferable in the present technology to set the bonding amount to 3 to 12% by mass for the expression of the advantageous effects described above.

By setting (3) the bonding amount of $\alpha,\beta$-unsaturated carboxylic acid units to 0.1% by mass or more, a reduction in tensile fatigue resistance in can be prevented. By setting the bonding amount to 2% by mass or less, the shrinkage of the compound in kneading is reduced, so that the workability can be improved. The bonding amount of $\alpha,\beta$-unsaturated carboxylic acid units may be freely set in the range of 0.1 to 2% by mass. It is more preferable in the present technology to set the bonding amount to 0.3 to 1.2% by mass for the expression of the advantageous effects described above.

As the bonding amount of (4) the other copolymerizable monomer units, the other copolymerizable monomer units are preferably used in a proportion of 10% by mass or less.

By setting the bonding amount of other copolymerizable monomer units to 10% by mass or less, a reduction in tensile strength or the like of the xanthogen-modified rubber to be obtained can be prevented.

The weight average molecular weight of the xanthogen-modified chloroprene rubber of the present technology is 340,000 to 520,000. When the weight average molecular weight is 340,000 or more, an excessive increase in adhesiveness to roll is prevented, so that the workability can be improved. When the weight average molecular weight is 520,000 or less, the shrinkage of the compound in kneading is reduced, so that the workability can be improved. Although a weight-average molecular weight in the range of 340,000 to 520,000 is included in the present technology, it is more preferable in the present technology that the weight-average molecular weight is 380,000 to 480,000 for the expression of the advantageous effect described above.

[Method for manufacturing xanthogen-modified chloroprene rubber]

A polymerization method for obtaining the xanthogen-modified chloroprene rubber is not particularly limited insofar as the advantageous effects of the present technology are not impaired. Any common polymerization method usable for chloroprene rubbers may be freely selected and used. For example, the xanthogen-modified chloroprene rubber can be obtained by performing emulsion polymerization of chloroprene monomers by a commonly used method in the presence of a polymerization initiator generally used in the polymerization of chloroprene.

The polymerization initiator for use in the polymerization of chloroprene is also not particularly limited insofar as the advantageous effects of the present technology are not impaired. One kind or two or more kinds of common polymerization initiators usable for chloroprene rubbers may be freely selected and used. For example, potassium persulfate, ammonium persulfate, sodium persulfate, hydrogen peroxide, organic peroxides, such as t-butyl hydroperoxide, and the like are mentioned.

An emulsifier in carrying out the emulsion polymerization is also not particularly limited insofar as the advantageous effects of the present technology are not impaired. One kind or two or more kinds of common emulsifiers usable of chloroprene rubbers may be freely selected and used. For example, alkali-metal salts of saturated or unsaturated fatty acids having 6 to 22 carbon atoms, alkali metal salts of rosin acid or disproportionated rosin acids, alkali metal salts of saturated or unsaturated alkylbenzenesulfonic acids having 6 to 18 carbon atoms, alkali metal salts of saturated or unsaturated alkyl diphenyl ether sulfonic acids having 10 to 20 carbon atoms, alkali metal salts of $\beta$-naphthalenesulfonic acid formalin condensates, and the like are mentioned.

The polymerization temperature in performing the polymerization of chloroprene is also not particularly limited and may be freely set according to the properties of a target chloroprene rubber or the type, the blending amount, or the like of monomers to be polymerized. Particularly in the present technology, the polymerization temperature is preferably set to 0 to 50°C and more preferably set to 20 to 50°C.

The final conversion rate in performing the polymerization of chloroprene is also not particularly limited and may be freely set according to the properties of a target chloroprene rubber or the type, the blending amount, or the like of monomers to be polymerized. Particularly in the present technology, the polymerization is preferably performed so that the final conversion rate is in the range of 50 to 90% by mass.

The final conversion rate may be adjusted by terminating the polymerization by adding a polymerization inhibitor terminating a polymerization reaction, for example, when a desired conversion rate is obtained.

The polymerization inhibitor to be used in terminating the polymerization of chloroprene is also not particularly limited insofar as the advantageous effects of the present technology are not impaired. One or two or more kinds of common polymerization inhibitors usable for the polymerization chloroprene may be freely selected and used. For example, thiodiphenylamine, 4-tertiary-butylcatechol, 2,2-methylenebis-4-methyl-6-tertiary-butylphenol, and the like are mentioned.

After the termination of the polymerization of chloroprene, unreacted chloroprene is removed by steam stripping, for example, and then the pH is adjusted. Then, a chloroprene rubber is obtained through steps, such as conventional freezing coagulation, water washing, and hot air drying.

<2. Rubber composition>

The rubber composition comprising the xanthogen-modified chloroprene rubber according to the present technology is obtained by kneading the xanthogen-modified chloroprene rubber described above with carbon black, a plasticizer, a processing aid, an aging inhibitor, a vulcanizing agent, a vulcanization accelerator, and the like at a temperature equal to or less than the vulcanization temperature.

The carbon black is a reinforcing agent to be blended in order to improve the mechanical properties of a vulcanized rubber obtained by vulcanizing the rubber composition of the present technology and commercially available substances may be used. The type of the carbon black is not particularly limited. For example, SRF, FEF, GPF, MAF, FT, MT, acetylene black, channel black, HAF, ISAF, and the like are mentioned.

The blending amount of the carbon black may be arbitrarily adjusted according to desired rubber hardness. The blending amount is not particularly limited. When the blending amount is 10 to 200 parts by mass based on 100 parts by mass of the rubber, the hardness can be adjusted without impairing rubber elasticity.

As the plasticizer, a plasticizer compatible with the chloroprene rubber is usable. For example, vegetable oils, such as rapeseed oil, phthalate-based plasticizers, DOS, DOA, ester-based plasticizers, ether-ester-based plasticizers, thioether-based plasticizers, aroma-based oils, naphthene-based oils, and the like are mentioned. One kind or two or more kinds of the plasticizers may be used according to desired properties. The addition amount of the plasticizer is preferably 5 to 50 parts by mass based on 100 parts by mass of the chloroprene rubber.

As the processing aid, fatty acids, such as stearic acid, paraffin-based processing aids, such as polyethylene, fatty acid amides, and the like are mentioned. The processing aids may be added in a proportion up to 0.5 to 5 parts by mass based on 100 parts by mass of the chloroprene rubber.

As the aging inhibitor, common aging inhibitors, such as amine-based, imidazole-based, metal carbamate salt-based, phenol-based, and wax-based aging inhibitors may be used. The aging inhibitors may be used alone or in combination.

The vulcanizing agent is not particularly limited and metal oxides are preferable. Specifically, zinc oxide, magnesium oxide, lead oxide, trilead tetraoxide, iron trioxide, titanium dioxide, calcium oxide, hydrotalcite, and the like are mentioned. The vulcanizing agents may be used in combination of two or more kinds thereof. The addition amount of the vulcanizing agents is preferably 3 to 15 parts by mass based on 100 parts by mass of the vibration isolation rubber.

By the use of the vulcanizing agent in combination with a vulcanization accelerator described below, the vulcanization can also be more effectively performed.

As the vulcanization accelerator, thiourea-based, guanidine-based, thiuram-based, and thiazole-based vulcanization accelerators generally used in vulcanization of chloroprene rubbers may be used. The thiourea-based vulcanization accelerators are not particularly limited and ethylene thiourea, diethylthiourea, trimethylthiourea, triethylthiourea, N,N'-diphenylthiourea, and the like are mentioned. A vulcanization accelerato, such as 3-methylthiazolidine-thione-2, a mixture of thiadiazole and phenylene dimaleimide, dimethylammonium hydrogen isophthalate, or 1,2-dimercapto-1,3,4-thiadiazole derivative may also be used. The vulcanization accelerators may be used in combination of two or more kinds thereof mentioned above. The addition amount of the vulcanization accelerator is preferably 0.1 to 5 parts by mass based on 100 parts by mass of the chloroprene rubber according to the present technology.

As devices used in kneading, any known device may be freely selected and used insofar as the advantageous effects of the present technology are not impaired. For example, kneading devices, such as a mixer, a Banbury mixer, a kneader mixer, and a two-roll mixer, can be mentioned.

<3. Vulcanized molded body>

The rubber composition according to the present technology can be suitably used as a vulcanized molded body by being vulcanized. In the vulcanized molded body according to the present technology, a vulcanization method is not particularly limited. For example, the vulcanized molded body may be obtained by molding the chloroprene rubber composition into a desired shape, and then vulcanizing the same or vulcanizing the chloroprene rubber composition into a vulcanized molded body, and then molding the same into a desired shape.

As a method for molding the rubber composition according to the present technology or the vulcanized molded body according to the present technology, any known method may be freely selected and used insofar as the advantageous effects of the present technology are not impaired. For example, press molding, extrusion molding, calendering molding and the like are mentioned.

The vulcanization temperature at which the rubber composition according to the present technology is vulcanized may be freely set according to the composition of the rubber composition, the type of the vulcanizing agent, or the like. In the present technology, the vulcanization is preferably performed normally at 140 to 220°C and more preferably at 150 to 180°C.

<4. Applications of vulcanized molded body>

The vulcanized molded body according to the present technology can be used for various applications utilizing the property that the mechanical properties and the tensile fatigue resistance are high while maintaining weather resistance and flame resistance.

The applications of the vulcanized molded body according to the present technology are not particularly limited and applications in which the properties are utilized may be freely selected and used. Particularly in the present technology, the vulcanized molded body according to the present technology can be suitably used for an air spring, a vehicle boot, a wiper, or a vibration isolation rubber.

Examples

Hereinafter, the present technology is described in more detail with reference to Examples and Comparative Examples. The Examples described below are only typical examples of the present invention and the scope of the technology shall not be narrowly construed by the Examples.

[Example 1]

<Production of xanthogen-modified chloroprene rubber>

In a polymerization tank having an internal capacity of 30 liters, 92 parts by mass of chloroprene monomer, 1 part by mass of methacrylic acid, 7 parts by mass of 2,3-dichloro-1,3-butadiene, 0.4 part by mass of diethylxanthogen sulfide, 105 parts by mass of pure water, 3.80 parts by mass of sodium dodecylbenzenesulfonate (Trade Name: Neopelex G-15: manufactured by Kao Corporation.), and 0.5 part by mass of sodium salt of β-naphthalenesulfonic acid formalin condensate (Trade Name: DEMOL N, manufactured by Kao Corporation) were placed.

0.1 part by mass of potassium persulfate was added thereto as a polymerization initiator, and then polymerization was performed at a polymerization temperature of 40°C under a nitrogen stream. When the conversion rate reached 70%, diethyl hydroxyamine which is a polymerization terminator was added thereto to terminate the polymerization to give a latex.

The latex obtained in the processes described above was distilled under reduced pressure to remove unreacted monomers to give a polymerization-terminated latex.

Thereafter, the polymerization-terminated latex was cooled, and then the polymer was isolated by a common freezing coagulation method to give a xanthogen-modified chloroprene rubber.

<Measurement of physical properties of xanthogen-modified chloroprene rubber>

The bonding amount of α,β-unsaturated carboxylic acid, the bonding amount of 2,3-dichloro-1,3-butadiene, and the bonding amount of chloroprene and the weight-average molecular weight of the xanthogen-modified chloroprene rubber obtained above were measured based on the conditions described below. The results are given in Table 1.

(Measurement of bonding amount of α,β-unsaturated carboxylic acid)

The obtained xanthogen-modified chloroprene rubber was subjected to pyrolysis GC-MS measurement under the conditions described below. The bonding amount of α,β-unsaturated carboxylic acid was determined from a ratio (A1/A2) of the area (A1) of a peak derived from chloroprene having a peak at a retention time of 11.2 to 11.4 min to the area (A2) of a peak derived from α,β-unsaturated carboxylic acid having a peak at a retention time of 10.8 to 11 min using a calibration curve. For the calibration curve, samples in which the bonding amounts of α,β-unsaturated carboxylic acid and 2,3-dichloro-1,3-butadiene are known were used.
Device: Jms-Q1050GC (manufactured by JEOL)
Column: DB-WAX, length: 60 m, internal diameter: 0.25 mm, film thickness: 0.5 $\mu$m (manufactured by Agilent)
Column temperature: 100°C (0 min) → 10°C /min → 240°C (10 min)
Inlet port temperature: 240°C
Carrier: He 1.5 mL/min (split ratio 1: 15)
Detector: mass spectrometer
Mass/charge number in selected ion detection mode: m/z=91 (A1: chloroprene-derived), M/z=86 (A2: methacrylic acid-derived)
Detector temperature: 240°C
Ion source temperature: 240°C
Ionization current: 50 $\mu$A
Ionization voltage: 70 eV
Detector voltage: -1200 V
Ionization method: EI
Pyrolysis apparatus: PY-3030D (manufactured by Frontier Laboratories Ltd.)
Thermal decomposition temperature: 590°C
Sample amount: 0.05 mg

(Measurement of bonding amount of 2,3-dichloro-1,3-butadiene)

The obtained xanthogen-modified chloroprene rubber was subjected to pyrolysis GC measurement under the conditions described below.

The bonding amount of 2,3-dichloro-1,3-butadiene was determined from a ratio (S1/S2) of the area (S1) of a peak derived from chloroprene having a peak at a retention time of 4.5 to 4.7 min to the area (S2) of a peak derived from 2,3-dichloro-1,3-butadiene-derived having a peak at a retention time of 9.0 to 9.2 min using a calibration curve. For the calibration curve, samples in which the bonding amounts of $\alpha,\beta$-unsaturated carboxylic acid and 2,3-dichloro-1,3-butadiene contents are known were used.
Device: HP 5890 Series II (manufactured by Agilent)
Column: DB-5, length: 30 m, internal diameter: 0.25 mm, film thickness: 1 $\mu$m (manufactured by Agilent)
Column temperature: 50°C (5 min) → 10°C/min → 120°C (0 min) → 25°C/min → 300°C (10 min)
Inlet port temperature: 250°C
Carrier: He 0.8 mL/min (split ratio 1: 50)
Detector temperature: 280°C
Detector: FID
Pyrolysis apparatus: JPS-330 (manufactured by Japan Analytical Industry Co., Ltd.)
Thermal decomposition temperature: 590°C
Sample amount: 0.05 mg

(Calculation of bonding amount of chloroprene)

The bonding amount of chloroprene was determined according to the following expression.

$$100 - (\text{Bonding amount of } \alpha,\beta\text{-unsaturated carboxylic acid} + \text{Bonding amount of 2,3-dichloro-1,3-butadiene})$$

(Measurement of weight-average molecular weight)

The obtained xanthogen-modified chloroprene rubber was subjected to GPC measurement under the conditions described below. The weight average molecular weight was calculated in terms of polystyrene. The measurement was performed by preparing the xanthogen-modified chloroprene rubber into a 0.1% THF solution.
Analyzer: HLC-8120 GPC (manufactured by TOSOH CORPORATION)
Analysis column: TSK-GEL GMHHR-H (5 $\mu$m) × 3, 7.8 mm $\phi$ × 300 mm (manufactured by TOSOH CORPORATION)
Guard column: TSK-guard column HHR-H (5 $\mu$m), 6 mm $\phi$ × 40 mm
(manufactured by TOSOH CORPORATION)
Column temperature: 40°C

Solvent: THF special grade, Flow rate: 1 mL/min

<Production of evaluation sample>

With 100 parts by mass of the obtained xanthogen-modified chloroprene rubber, 1 part by mass of stearic acid (Trade Name: LUNAC S-70V: manufactured by Kao Corporation), 4 parts by mass of magnesium oxide (Trade Name: Kyowamag 30: manufactured by Kyowa Chemical Industry Co., Ltd.), 35 parts by mass of carbon black (SRF) (Trade Name: Asahi #50: manufactured by Asahi Carbon Co., Ltd.), 5 parts by mass of rapeseed oil (Trade Name: NATANE SHIRASHIMEYU: manufactured by Nisshin OilliO Group, Ltd.), 5 parts by mass of zinc oxide (Trade Name: Zinc oxide two: manufactured by Sakai Chemical Industry Co., Ltd.), and 0.5 part by mass of ethylene thiourea (Trade Name: Accel 22S: manufactured by Kawaguchi Chemical Industry Co., Ltd.) were mixed using 8 inch rolls, and then press-vulcanized at 160°C for 20 minutes to give an evaluation sample.

<Various evaluations of evaluation sample>

The evaluation sample obtained above was evaluated for the adhesiveness to roll and the compound shrinkability as workability and the tensile strength, the elongation at break, the permanent deformation due to compression at low temperature, and the tensile fatigue resistance as the mechanical strength based on the criteria described below. The results are given in Table 1.

(Adhesiveness to roll)

The adhesiveness to roll was evaluated in the following three grades based the state in kneading using 8 inch rolls.
○: No adhesiveness
Δ: Slight adhesiveness, Separable when pulled strongly
×: Strong adhesiveness, Non-separable

(Compound shrinkability)

The compound shrinkability was evaluated based on the shrinkage factor when the compound was preformed into a sheet shape using 8 inch rolls. The roll gap of the 8 inch rolls was set to 2 mm, and then 500 g of the compound was passed therethrough to thereby perform molding. The shrinkage factor was calculated according to the following expression, and the shrinkability was evaluated in the following three grades. L represents the shrinkage factor (%), $L_0$ represents the length of the sheet 30 seconds after the molding, and $L_1$ represents the length of the sheet 10 minutes after the molding.

$$L = (L_0 - L_1)/L_0 \times 100$$

○: The shrinkage factor is less than 5%.
Δ: The shrinkage factor is 5% or more and less than 10%.
×: The shrinkage factor is 10% or more.

(Tensile strength and Elongation at break)

The tensile strength and the elongation at break were determined according to JIS K6251.

(Permanent deformation due to compression at low temperature)

The permanent deformation due to compression was measured according to JIS K6262 (Test condition: -20°C × 70 hours).

(Tensile fatigue)

With respect to the tensile fatigue, the fracture number was determined according to JIS K6270 using No. 3 test piece at a test temperature of 23°C and an elongation rate of 0 to 100%. The evaluation was performed in the following three grades based on the fracture number.

○: The fracture number is 1000,000 or more.

Δ: The fracture number is 500,000 or more and less than 1000,000.

×: The fracture number is less than 500,000.

[Examples 2 to 12, Comparative Examples 1 to 8]

Xanthogen-modified chloroprene rubbers having the compositions given in Tables 1 and 2 described below were produced in the same manner as in Example 1 with the feed amounts given in Tables 1 and 2 described below, and then the bonding amount of $\alpha,\beta$-unsaturated carboxylic acid, the bonding amount of 2,3-dichloro-1,3-butadiene, the bonding amount of chloroprene and the weight average molecular weight were measured. Evaluation samples were produced in the same manner as in Example 1, and then evaluated for the adhesiveness to roll, the compound shrinkability, the tensile strength, the elongation at break, the permanent deformation due to compression at low temperature, and the tensile fatigue resistance. The results are given in Tables 1 and 2.

[Table 1]

| | | | Example | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 |
| Fee d amount | Chloroprene | part(s) by mass | 92.0 | 92.7 | 87.0 | 95.8 | 84.1 | 92.0 | 89.5 | 93.4 | 91.4 | 88.3 | 94.3 | 87.9 |
| | 2,3-Dichloro-1,3-butadiene | part(s) by mass | 7.0 | 6.9 | 6.1 | 0.7 | 15.0 | 6.9 | 7.6 | 5.5 | 7.3 | 8.7 | 5.2 | 9.2 |
| | $\alpha,\beta$-unsaturated carboxylic acid / Acrylic acid | part(s) by mass | | | | | | | | | 1.3 | | | |
| | $\alpha,\beta$-unsaturated carboxylic acid / Methacrylic acid | part(s) by mass | 1.0 | 0.4 | 6.9 | 3.5 | 0.9 | 1.1 | 2.9 | 1.1 | | | 0.5 | 2.9 |
| | $\alpha,\beta$-unsaturated carboxylic acid / 2-ethylmethacrylic acid | part(s) by mass | | | | | | | | | | 3.0 | | |
| | Chain transfer agent | part(s) by mass | 0.4 | 0.5 | 0.5 | 0.5 | 0.5 | 0.4 | 0.7 | 0.6 | 0.5 | 0.5 | 0.7 | 0.8 |

(continued)

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Composition | Chloroprene unit | % by mass | 90.57 | 90.40 | 89.50 | 98.05 | 79.75 | 90.20 | 88.70 | 92.20 | 89.65 | 87.20 | 92.35 | 87.25 |
| | 2,3-Dichloro-1,3-butadiene unit | % by mass | 9.20 | 9.50 | 8.50 | 1.00 | 20.00 | 9.50 | 10.50 | 7.50 | 10.00 | 12.00 | 7.50 | 12.00 |
| | α,β-unsatu-rated carbox-ylic acid unit — Acrylic acid | % by mass | | | | | | | | | 0.35 | | | |
| | α,β-unsatu-rated carbox-ylic acid unit — Methacrylic acid | % by mass | 0.23 | 0.10 | 2.00 | 0.95 | 0.25 | 0.30 | 0.80 | 0.30 | | | 0.15 | 0.75 |
| | α,β-unsatu-rated carbox-ylic acid unit — 2-ethylmeth-acrylic acid | % by mass | | | | | | | | | | 0.80 | | |
| | Weight average molecular weight | g/mol | 340,000 | 400,000 | 420,000 | 390,000 | 400,000 | 340,000 | 520,000 | 460,000 | 370,000 | 370,000 | 460,000 | 440,000 |
| | Chain transfer agent type | | A | A | A | A | A | A | A | A | A | A | B | C |
| Physical propertie s | Adhesiveness to roll | | ○ | ○ | ○ | ○ | ○ | ○ | ○ | ○ | ○ | ○ | ○ | ○ |
| | Compound shrinkability | | ○ | ○ | ○ | ○ | ○ | ○ | ○ | ○ | ○ | ○ | ○ | ○ |
| | Tensile strength | MPa | 20 | 20 | 21 | 21 | 18 | 19 | 19 | 21 | 21 | 20 | 20 | 20 |
| | Elogation at break | % | 640 | 630 | 650 | 690 | 550 | 650 | 530 | 670 | 670 | 640 | 640 | 640 |
| | Permanent deforation due to compression(-20°C) | % | 35 | 34 | 38 | 48 | 31 | 33 | 38 | 40 | 40 | 32 | 32 | 32 |
| | Tensile fatigue resistance | | ○ | ○ | ○ | ○ | ○ | ○ | ○ | ○ | ○ | ○ | ○ | ○ |

[Table 2]

| Feed amount | | | | Comparative Example | | | | | | | |
|---|---|---|---|---|---|---|---|---|---|---|---|
| | | | | 1 | 2 | 3 | 4 | 5 | 6 | 7 | 8 |
| | Chloroprene | | part (s) by mass | 92.4 | 85.8 | 98.3 | 83.0 | 91.0 | 91.3 | 91.5 | 90.8 |
| | 2,3-Dichloro-1,3-butadiene | | part (s) by mass | 7.4 | 6.9 | 0.6 | 16.0 | 8.0 | 7.7 | 6.9 | 7.2 |
| | $\alpha,\beta$-unsaturated carboxylic acid | Acrylic acid | part (s) by mass | | | | | | | | |
| | | Methacrylic acid | part (s) by mass | 0.2 | 7.3 | 1.1 | 1.0 | 1.0 | 1.0 | 1.6 | 2.0 |
| | | 2-ethylmethacrylic acid | part (s) by mass | | | | | | | | |
| | Chain transfer agent | | part (s) by mass | 0.5 | 0.6 | 0.5 | 0.5 | 0.4 | 0.7 | 0.9 | 0.8 |

(continued)

| | | | Comparative Example | | | | | | | |
|---|---|---|---|---|---|---|---|---|---|---|
| | | | 1 | 2 | 3 | 4 | 5 | 6 | 7 | 8 |
| Composition | Chloroprene unit | % by mass | 89.95 | 88.40 | 98.90 | 78.75 | 88.75 | 89.25 | 90.05 | 89.45 |
| | 2,3-Dichloro-1,3-butadiene unit | % by mass | 10.00 | 9.50 | 0.80 | 21.00 | 11.00 | 10.50 | 9.50 | 10.00 |
| | $\alpha,\beta$-unsaturated carboxylic acid unit — Acrylic acid | % by mass | | | | | | | | |
| | $\alpha,\beta$-unsaturated carboxylic acid unit — Methacrylic acid | % by mass | 0.05 | 2.10 | 0.30 | 0.25 | 0.25 | 0.25 | 0.45 | 0.55 |
| | $\alpha,\beta$-unsaturated carboxylic acid unit — 2-ethylmethacrylic acid | % by mass | | | | | | | | |
| | Weight average molecular weight | g/mol | 410,000 | 440,000 | 380,000 | 400,000 | 330,000 | 530,000 | 440,000 | 390,000 |
| | Chain transfer agent type | | A | A | A | A | A | A | D | E |
| Physic al properties | Adhesiveness to roll | | ○ | ○ | ○ | ○ | × | ○ | ○ | ○ |
| | Compound shrinkability | | ○ | × | ○ | ○ | - | × | ○ | ○ |
| | Tensile strength | MPa | 20 | - | 21 | 14 | - | - | 14 | 13 |
| | Elogation at break | % | 670 | | 670 | 520 | | | 610 | 660 |
| | Permanent deforation due to compression(-20°C) | % | 20 | | 65 | 16 | | | 35 | 34 |
| | Tensile fatigue resistance | | × | | ○ | Δ | | | Δ | Δ |

As the chain transfer agent type in Tables 1 and 2, the following substances were used.

A Diethylxanthogen disulfide
B Diisopropylxanthogen disulfide
C Dicyclohexylxanthogen disulfide
D n-Octylmercaptan
E n-Dodecylmercaptan

As is clear from Tables 1 and 2, the xanthogen-modified chloroprene rubbers of the present technology of Examples 1 to 12 were more excellent in mechanophysical properties, tensile fatigue resistance, and permanent deformation due to compression at low temperature and had better workability than the xanthogen-modified chloroprene rubbers of Comparative Examples 1 to 8. Although not given in the tables, the weather resistance and the flame resistance were comparable to those of conventional chloroprene rubbers.

In contrast thereto, in Comparative Example 1, the bonding amount of $\alpha,\beta$-unsaturated carboxylic acid units was less than 0.1% by mass and the tensile fatigue resistance was poor.

In Comparative Example 2, the bonding amount of $\alpha,\beta$-unsaturated carboxylic acid units exceeded 2% by mass and the compound shrinkage in kneading was large, and therefore an evaluation sample for tensile strength, elongation at break, permanent deformation due to compression, and tensile fatigue was not able to be produced.

In Comparative Example 3, the bonding amount of 2,3-dichloro-1,3-butadiene units was less than 1% by mass and the permanent deformation due to compression at low temperature was poor.

In Comparative Example 4, the bonding amount of 2,3-dichloro-1,3-butadiene units exceeded 20% by mass and the tensile strength and the elongation at break were poor.

In Comparative Example 5, the weight average molecular weight was less than 340,000 and the adhesion to roll is strong in kneading, and thus an evaluation sample for compound shrinkage, tensile strength, elongation at break, permanent deformation due to compression, and tensile fatigue was not able to be produced.

In Comparative Example 6, the weight average molecular weight exceeded 530,000 and the compound shrinkage in kneading was large, and thus an evaluation sample for tensile strength, elongation at break, permanent deformation due to compression, and tensile fatigue was not able to be produced.

In Comparative Examples 7 and 8, mercaptan-modified chloroprene rubbers comprising dodecylmercaptan and octylmercaptan as a chain transfer agent were used and the tensile strength was poor.

Then, rubber compositions comprising the xanthogen-modified chloroprene rubbers of Examples were vulcanized, so that molded bodies excellent in tensile fatigue resistance and deformation resistance were obtained.

When an air spring was manufactured using the vulcanized molded body, an air spring excellent in fatigue resistance to repeated deformation was obtained. When a vehicle boot was manufactured using the vulcanized molded body, a vehicle boot excellent in fatigue resistance to repeated deformation was obtained. When a wiper was manufactured using the vulcanized molded body, a wiper excellent in fatigue resistance to repeated deformation was obtained. When hoses were manufactured using the vulcanized molded body, hoses excellent in deformation resistance were obtained. When a vibration isolation rubber was manufactured using the vulcanized molded body, a vibration isolation rubber excellent in fatigue resistance to repeated deformation was obtained.

**Claims**

1. A xanthogen-modified chloroprene rubber, wherein
   a bonding amount of chloroprene units is 78 to 98.9% by mass;
   a bonding amount of 2,3-dichloro-1,3-butadiene units is 1 to 20% by mass; and
   a bonding amount of $\alpha,\beta$-unsaturated carboxylic acid units is 0.1 to 2% by mass, and
   a weight average molecular weight is 340,000 to 520,000.

2. The xanthogen-modified chloroprene rubber according to Claim 1 comprising:
   at least one selected from acrylic acid, methacrylic acid, and 2-ethyl methacrylate as the $\alpha,\beta$-unsaturated carboxylic acid unit.

3. The xanthogen in the xanthogen-modified chloroprene rubber according to Claim 1 or 2 comprising:
   at least one selected from diethylxanthogen disulfide, diisopropylxanthogen disulfide, and dicyclohexylxanthogen disulfide as the xanthogen.

4. A rubber composition comprising:

the xanthogen-modified chloroprene rubber according to any one of Claims 1 to 3.

5. A vulcanized molded body, which is obtained by vulcanizing the rubber composition according to Claim 4.

6. The vulcanized molded body according to Claim 5, which is an air spring, a vehicle boot, a wiper, a hose, and a vibration isolation rubber.


**Patentansprüche**

1. Xanthogenmodifizierter Chloroprenkautschuk, wobei
eine gebundene Menge an Chloropren-Einheiten 78 bis 98,9 Massen-% beträgt;
eine gebundene Menge an $\alpha,\beta$-ungesättigten Carbonsäure-Einheiten 1 bis 20 Massen-% beträgt; und
ein Gewichtsmittel des Molekulargewichts 340.000 bis 520.000 beträgt.

2. Xanthogenmodifizierter Chloroprenkautschuk nach Anspruch 1, umfassend: wenigstens eines, ausgewählt aus Acrylsäure, Methacrylsäure und 2-Ethylmethacrylat, als $\alpha,\beta$-ungesättigte Carbonsäure-Einheit.

3. Xanthogen im xanthogenmodifizierten Chloroprenkautschuk nach Anspruch 1 oder 2, umfassend:
wenigstens eines, ausgewählt aus Diethylxanthogendisulfid, Diisopropylxanthogendisulfid und Dicyclohexylxanthogendisulfid als Xanthogen.

4. Kautschukzusammensetzung, umfassend:
den xanthogenmodifizierten Chloroprenkautschuk nach einem der Ansprüche 1 bis 3.

5. Vulkanisierter Formkörper, welcher erhalten wird durch Vulkanisieren der Kautschukzusammensetzung nach Anspruch 4.

6. Vulkanisierter Formkörper nach Anspruch 5, welcher ein Kautschuk einer Luftfeder, eines Fahrzeug-Kofferraums, eines Wischers, eines Schlauchs sowie ein Kautschuk zur Schwingungsisolierung ist.


**Revendications**

1. Caoutchouc chloroprène à modification xanthogène, dans lequel
une quantité de liaison de motifs chloroprène va de 78 à 98,9 % en masse ;
une quantité de liaison de motifs 2,3-dichloro-1,3-butadiène va de 1 à 20 % en masse ; et
une quantité de liaison de motifs acide carboxylique $\alpha,\beta$-insaturé va de 0,1 à 2 % en masse, et
une masse moléculaire moyenne en poids va de 340 000 à 520 000.

2. Caoutchouc chloroprène à modification xanthogène selon la revendication 1 comprenant :
au moins l'un sélectionné à partir d'acide acrylique, acide méthacrylique et méthacrylate de 2-éthyle en guise de motif acide carboxylique a,$\beta$-insaturé.

3. Xanthogène dans le caoutchouc chloroprène à modification xanthogène selon la revendication 1 ou 2 comprenant :
au moins l'un sélectionné à partir de disulfure de diéthylxanthogène, disulfure de diisopropylxanthogène et disulfure de dicyclohexylxanthogène en guise de xanthogène.

4. Composition de caoutchouc comprenant :
le caoutchouc chloroprène à modification xanthogène selon l'une quelconque des revendications 1 à 3.

5. Corps moulé vulcanisé, qui est obtenu par vulcanisation de la composition de caoutchouc selon la revendication 4.

6. Corps moulé vulcanisé selon la revendication 5, qui est un ressort pneumatique, un coffre de véhicule, un essuie-glace, un tuyau flexible et un caoutchouc d'isolation de vibrations.

**EP 3 556 786 B1**

**REFERENCES CITED IN THE DESCRIPTION**

**Patent documents cited in the description**

- JP 2001131342 A
- JP H09235414 A